# FASCICULE DE BREVET EUROPEEN

(11) **EP 1 915 797 B1**
(45) Date de publication et mention de la délivrance du brevet: **10.03.2010**
(21) Numéro de dépôt: 06792788.9
(22) Date de dépôt: 11.08.2006
(51) Int. Cl.: H01M 8/24, C08J 5/18, H01M 2/16, H01B 1/20, B29C 70/88

(54) **MEMBRANE POLYMERE COMPOSITE A CONDUCTION IONIQUE/ELECTRONIQUE, SES PROCEDES DE FABRICATION ET C UR DE PILE A COMBUSTIBLE PLANAIRE LA COMPRENANT**
POLYMERVERBUNDMEMBRAN MIT IONEN-/ELEKTRONENLEITFÄHIGKEIT, HERSTELLUNGSVERFAHREN DAFÜR UND KERN EINER PLANAREN BRENNSTOFFZELLE MIT DIESER MEMBRAN
POLYMER COMPOSITE IONIC/ELECTRONIC CONDUCTANCE MEMBRANE METHODS FOR THE PRODUCTION THEREOF AND A PLANAR FUEL CELL CORE COMPRISING SAID MEMBRANE

(30) Priorité: 16.08.2005 FR 0552517
(43) Date de publication de la demande: 30.04.2008
(73) Titulaire: COMMISSARIAT A L'ENERGIE ATOMIQUE, 75015 Paris (FR)
(72) Inventeur: CAPRON, Philippe, F-38200 Luzinay (FR); ROUGEAUX, Isabelle, F-38140 Rives (FR); TIQUET, Pascal, F-38100 Grenoble (FR)
(74) Mandataire: Poulin, Gérard
(86) Numéro de dépôt international: PCT/EP2006/065255
(87) Numéro de publication internationale: WO 2007/020242

(56) Documents cités:
- EP-A- 0 482 783
- US-A- 5 863 672
- US-A- 5 989 741

## Description

### DOMAINE TECHNIQUE

L'invention se rapporte à des procédés permettant de fabriquer une membrane polymère composite à conduction ionique (protonique ou anionique)/électronique.

La membrane polymère composite trouve notamment application dans la réalisation de coeurs de piles à combustible planaires, et en particulier de coeurs de piles présentant une architecture du type de celle décrite dans la demande internationale PCT publiée sous le numéro WO 02/054522 **[1],** qui sont utiles pour la génération de puissances électriques allant de quelques centaines de milliwatts à quelques centaines de kilowatts pour des applications stationnaires, des applications de transports et des applications portables et transportables.

En conséquence, est aussi décrit un coeur de pile à combustible planaire comprenant une telle membrane.

### ETAT DE LA TECHNIQUE ANTERIEURE

A l'heure actuelle, la plupart des piles à combustible sont bâties sur la base d'un "*sandwich*" composé de deux électrodes, une anode et une cathode, et d'un électrolyte qui est intercalé entre ces deux électrodes.

Les électrodes sont généralement constituées d'une couche de diffusion sur laquelle est déposée une couche active (catalytique). L'électrolyte peut être, lui, liquide comme dans les piles à combustible alcalines qui sont classiquement appelées piles AFC (de "*Alkalin Fuel Cell*") ou solide comme dans les piles à combustible à membrane conductrice de protons qui sont classiquement appelées piles PEMFC (de *"Proton Exchange Membran Fuel Cell").*

Un réactif différent arrive sur la face extérieure de chacune des deux électrodes, à savoir un carburant, typiquement de l'hydrogène, et un comburant, typiquement de l'oxygène.

Les électrodes sont ainsi le siège d'une réaction électrochimique (une oxydation de l'hydrogène ayant lieu à l'anode et une réduction de l'oxygène en eau ayant lieu à la cathode) de sorte qu'il est possible de prélever une tension électrique de l'ordre de 1 volt, à courant nul, aux bornes des deux électrodes.

La faible tension produite par ces piles à combustible constitue leur principal handicap par rapport aux batteries classiques dont la tension élémentaire peut monter jusqu'à 4 volts.

Pour remédier à ce problème, il est d'usage de constituer des piles à combustible en empilant un grand nombre de cellules ou piles élémentaires, comprenant chacune un sandwich anode/électrolyte/cathode, suivant une technologie classiquement appelée "*filtre-presse*".

Toutefois, cette technologie souffre de problèmes liés à une mauvaise distribution des gaz dans les différentes cellules et à une perte d'étanchéité dans l'empilement, problèmes qui sont d'autant plus importants que le nombre de cellules empilées est grand.

C'est ce qui a amené Ledjeff et al. à proposer, dans le brevet US n° 5,863,672 [2], une nouvelle architecture de pile à combustible dans laquelle la pile est constituée d'un ou de plusieurs étages comprenant chacun plusieurs piles élémentaires disposées les unes à côté des autres, par association de plusieurs paires d'électrodes de part et d'autre d'une membrane constituée d'un électrolyte polymère solide, ce qui permet d'augmenter ainsi artificiellement la tension élémentaire de la pile.

Cette architecture, qui est dite "*planaire*", puisqu'un étage est constitué de plusieurs piles élémentaires situées dans le même plan, est réalisée par un empilement de matériaux décalés les uns par rapport aux autres et nécessite l'utilisation de plaques distributrices de gaz électroniquement isolantes.

Compte tenu notamment de la complexité de réalisation de cette pile, il a été proposé, dans la référence [1], un procédé de fabrication d'une pile à combustible qui reprend le principe d'une architecture planaire tel que proposé par Ledjeff et al., mais qui en simplifie notablement la réalisation.

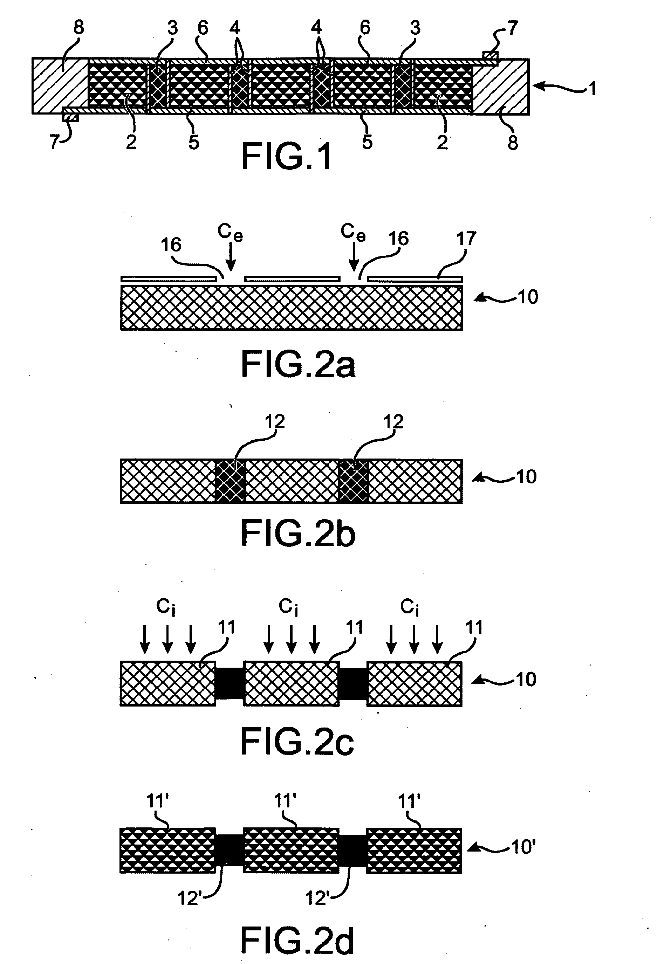

En référence à la figure 1 annexée, qui représente une vue en coupe transversale d'un étage 1 de la pile à combustible obtenue dans la référence [1], cet étage comprend :
- une membrane composite comprenant des portions 2 à conduction ionique et des portions 3 à conduction électronique, chaque portion à conduction électronique étant située entre deux portions à conduction ionique tout en étant séparée d'elles par un couple de parois isolantes 4 ;
- une succession d'anodes 5 sur une face de la membrane, chaque anode recouvrant à la fois une portion de membrane à conduction ionique et une portion de membrane à conduction électronique ;
- une succession de cathodes 6 sur la face de la matrice opposée à celle sur laquelle se trouvent les anodes, ces cathodes étant décalées par rapport aux anodes de sorte que les anodes et cathodes situées en vis-à-vis recouvrent la même portion de membrane à conduction ionique mais ne recouvrent pas la même portion de membrane à conduction électronique ;
- un collecteur électronique 7 à chacune des extrémités de l'assemblage ; et
- un joint périphérique 8 situé sur tout le pourtour de la membrane.

Selon ce document, la membrane composite est réalisée en déposant, sur et dans une matrice poreuse, un matériau de joint pour former la série de parois isolantes 4, ces parois délimitant, d'une part, des premières portions de matrice qui sont destinées à être remplies d'un matériau conducteur ionique et, d'autre part, des deuxièmes portions de matrice destinées à être remplies d'un matériau conducteur électronique. Puis, on dépose un matériau conducteur ionique sur lesdites premières portions et un matériau conducteur électronique sur lesdites deuxièmes portions.

Considérant qu'il devrait être possible d'augmenter encore les performances électrochimiques de cette pile, en améliorant, d'une part, l'étanchéité entre les portions de membrane à conduction ionique et les portions de membrane à conduction électronique et, d'autre part, les valeurs de conductivité électronique obtenues dans les "*traversées de courant*", lesquelles, lorsqu'elles sont insuffisantes, peuvent être responsables de fortes chutes ohmiques entraînant des pertes de performance et un échauffement de ces traversées, les Inventeurs se sont fixé :pour but de fournir une membrane composite à conduction ionique/électronique propre à être utilisée dans une pile à combustible planaire telle que décrite dans la référence **[1],** et à conférer à cette pile des performances électrochimiques supérieures à celles obtenues avec la membrane composite proposée dans cette référence.

Les Inventeurs se sont, de plus, fixé pour but que cette membrane composite puisse être fabriquée par des procédés qui soient simples à mettre en oeuvre et à un coût compatible avec la fabrication de piles à combustible à une échelle industrielle.

### EXPOSÉ DE L'INVENTION

Ces buts, et d'autres encore, sont atteints par une membrane polymère composite à conduction ionique/électronique, qui comprend au moins deux portions polymères à conduction ionique étanches aux gaz, reliées entre elles directement par une portion polymère à conduction électronique étanche aux gaz.

Dans le cadre de la présente invention, on considère qu'une portion polymère est étanche aux gaz lorsqu'elle présente un coefficient de perméation gazeuse inférieur à 10⁻¹⁰ cm²/s/Pa et, avantageusement, inférieur à 10⁻¹² cm²/s/Pa.

Les portions polymères à conduction ionique de la membrane peuvent être constituées :
* soit d'un polymère conducteur ionique intrinsèque ;
* soit d'un polymère dénué de toute propriété intrinsèque de conduction ionique et que l'on a rendu conducteur ionique par incorporation d'un matériau conducteur ionique ;
* soit encore d'un polymère conducteur ionique intrinsèque et dont on a renforcé les propriétés de conduction ionique par incorporation d'un matériau conducteur ionique ;
la conduction ionique dudit polymère ou dudit matériau pouvant aussi bien être de nature protonique qu'anionique.

Lorsque le polymère constituant les portions polymères à conduction ionique de la membrane est un polymère conducteur protonique intrinsèque, alors ce polymère peut notamment être choisi parmi les polymères perfluorés à groupements acide sulfonique tels que ceux commercialisés sous les marques déposées Nafion^{®} (Du Pont de Nemours), Aciplex-S^{®} (Asahi Chemical) ou Flemion^{®} (Dow Chemicals), et les polymères sulfonés décrits dans la littérature comme les polyimides sulfonés, les polyétheréthercétones sulfonées, les polysulfones sulfonées et leurs dérivés, les polyphosphazènes sulfonés et les polybenzimidazoles.

Lorsque le polymère constituant les portions polymères à conduction ionique de la membrane est un polymère conducteur anionique intrinsèque, alors ce polymère peut notamment être choisi parmi les polymères porteurs de groupements cationiques tels que les dérivés quaternisés des polychlorométhylstyrènes, des polyanilines et des polyimides, et les polyarylsulfoniums.

Lorsque le polymère constituant les portions polymères à conduction ionique de la membrane est un polymère dénué de toute propriété intrinsèque de conduction ionique que l'on a rendu conducteur ionique par incorporation d'un matériau conducteur ionique, alors ce polymère peut notamment être choisi parmi les polyéthylènes, les polypropylènes, les polyesters thermoplastiques comme les polyéthylène téréphtalates, les polymères fluorés, en particulier les polytétrafluoroéthylènes et les copolymères à base de tétrafluoroéthylène comme les poly(éthylène/tétrafluoroéthylène), les polyamides, les polyétheréthercétones et les élastomères thermoplastiques comme les polyuréthannes et les terpolymères éthylène/propylène/diène.

Un polytétrafluoroéthylène ou un copolymère à base de tétrafluoroéthylène est particulièrement préféré.

Quant au matériau conducteur ionique susceptible d'être incorporé dans ces polymères, il peut notamment être l'un des polymères conducteurs ioniques intrinsèques précédemment cités, ou un matériau non polymérique à conduction ionique comme un hétéropolyacide, un liquide ionique ou un sel fondu, par exemple des sels de diimidazolium d'alkyle ou d'imidazolium d'aryle.

La portion polymère à conduction électronique de la membrane peut être constituée :
* soit d'un polymère conducteur électronique intrinsèque ;
* soit d'un polymère dénué de toute propriété intrinsèque de conduction électronique et que l'on a rendu conducteur électronique par incorporation d'un matériau conducteur électronique ;
* soit encore d'un polymère conducteur électronique intrinséque et dont on a renforcé les propriétés de conduction électronique par incorporation d'un matériau conducteur électronique.

Avantageusement, la portion à conduction électronique de la membrane est constituée d'un polymère renfermant des inclusions d'un matériau conducteur électronique, ce polymère pouvant être identique à, ou différent de, celui qui constitue les portions polymères à conduction ionique de la membrane.

Ainsi, ce polymère peut notamment être choisi parmi les polymères conducteurs ioniques intrinsèques précédemment mentionnés.

En variante, il peut aussi être un polyéthylène, un polypropylène, un polyester thermoplastique, un polymère fluoré, un polyamide, une polyétheréthercétone ou un élastomère thermoplastique, un polytétrafluoroéthylène ou un copolymère à base de tétrafluoroéthylène étant, dans ce cas, particulièrement préféré.

Le matériau conducteur électronique présent dans ce polymère, sous forme d'inclusions, peut être tout matériau, autant que possible inoxydable, connu pour présenter des propriétés de conduction électronique tel que le carbone, le graphite, les métaux nobles comme le platine, l'or et l'argent, et leurs alliages avec des éléments de transition (par exemple, Cr, Mn, Ni, Co et Fe).

Avantageusement, les portions polymères à conduction ionique et la portion polymère à conduction électronique de la membrane sont constituées par le même polymère.

Dans ce cas, deux modes de réalisation de cette membrane sont particulièrement préférés, à savoir :
* un premier mode de réalisation dans lequel le polymère est un polymère dénué de toute propriété intrinsèque de conduction ionique, auquel cas ce polymère renferme un matériau conducteur ionique dans les portions polymères à conduction ionique et des inclusions d'un matériau conducteur électronique dans la portion polymère à conduction électronique ; et
* un deuxième mode de réalisation dans lequel le polymère est un polymère conducteur ionique intrinsèque, auquel cas ce polymère renferme des inclusions d'un matériau conducteur électronique dans la portion polymère à conduction électronique de la membrane.

Dans tous les cas, les portions polymères à conduction ionique de la membrane sont, de préférence, à conduction protonique.

La membrane se présente préférentiellement sous la forme d'un film mince, c'est-à-dire d'un film mesurant de 20 à 300 micromètres d'épaisseur et, mieux encore, de 20 à 60 micromètres d'épaisseur.

Toutefois, d'autres formes peuvent être envisagées, allant de la cellule prismatique au cylindre spiralé en passant par un tube.

Par ailleurs, bien que la membrane puisse n'être constituée que de deux portions polymères à conduction ionique reliées entre elles directement par une portion polymère à conduction électronique, on préfère, toutefois, qu'elle comprenne un nombre plus élevé de portions polymères à conduction ionique et, partant, un nombre plus élevé de portions polymères à conduction électronique.

Aussi, la membrane comprend-t-elle, de préférence, *n* portions polymères à conduction ionique étanches aux gaz et *n-1* portion(s) polymère(s) à conduction électronique étanche(s) aux gaz, *n* étant un nombre entier allant de 2 à 100 et, de préférence, de 4 à 50, et chaque portion polymère à conduction électronique étant intercalée entre deux portions polymères à conduction ionique.

L'invention a pour objet des procédés permettant de fabriquer une membrane polymère composite telle que précédemment définie.

Selon un premier procédé, la fabrication de la membrane polymère composite comprend :
a) le dépôt d'un matériau conducteur électronique dans les pores d'une matrice poreuse constituée d'un polymère et comprenant au moins deux portions destinées à être remplies d'un conducteur ionique, reliées entre elles directement par une portion destinée à être remplie d'un matériau conducteur électronique, ce dépôt étant limité à la portion de matrice poreuse destinée à être remplie du matériau conducteur électronique ;
b) l'application, à la portion de matrice poreuse remplie du matériau conducteur électronique, d'un traitement pour obtenir le ramollissement du polymère constituant cette portion de matrice et le bouchage des pores de ladite portion de matrice par déformation du polymère ainsi ramolli ;
c) le remplissage par un matériau conducteur ionique des portions de matrice poreuse destinées à être remplies du matériau conducteur ionique.

Selon un deuxième procédé, la fabrication de la membrane polymère composite comprend
a) le dépôt d'un matériau conducteur électronique dans les pores d'une matrice poreuse constituée d'un polymère et comprenant au moins deux portions destinées à être remplies d'un matériau conducteur ionique, reliées entre elles directement par une portion destinée à être remplie d'un matériau conducteur électronique, ce dépôt étant limité à la portion de matrice poreuse destinée à être remplie du matériau conducteur électronique ;
b) le remplissage par un matériau conducteur ionique des portions de matrice poreuse destinées à être remplies du matériau conducteur ionique ; et
c) l'application, à la portion de matrice poreuse remplie du matériau conducteur électronique, d'un traitement pour obtenir le ramollissement du polymère constituant cette portion de matrice et le bouchage des pores de cette portion de matrice par déformation du polymère ainsi ramolli.

Selon un troisième procédé, la fabrication de la membrane polymère composite comprend :
a) le dépôt d'un matériau conducteur électronique dans les pores d'une matrice poreuse constituée d'un polymère ;
b) la découpe de la matrice poreuse remplie de matériau conducteur électronique en une pluralité de segments ;
c) la formation d'une membrane polymère composite par intercalation d'un des segments obtenus à l'étape b) entre au moins deux segments polymères à conduction ionique étanches aux gaz et solidarisation de ces segments entre eux ; et
d) l'application, au segment de matrice poreuse rempli du matériau conducteur électronique présent dans la membrane polymère composite obtenue à l'étape c), d'un traitement pour obtenir le ramollissement du polymère constituant ce segment de matrice et le bouchage des pores dudit segment de matrice par déformation du polymère ainsi ramolli.

Selon un quatrième procédé, la fabrication de la membrane polymère composite comprend :
a) le dépôt d'un matériau conducteur électronique dans les pores d'une matrice poreuse constituée d'un polymère ;
b) l'application à la matrice poreuse d'un traitement pour obtenir le ramollissement du polymère constituant cette matrice et le bouchage des pores de ladite matrice par déformation du polymère ainsi ramolli ;
c) la découpe de la matrice obtenue à l'étape b) en une pluralité de segments ;
d) la formation de la membrane polymère composite par intercalation d'un des segments obtenus à l'étape c) entre au moins deux segments polymères à conduction ionique étanches aux gaz et solidarisation de ces segments entre eux.

Conformément à l'invention, dans les quatre procédés qui viennent d'être décrits et, tout spécialement dans les deux derniers, on utilise, de préférence, une matrice poreuse constituée d'un polymère dénué de toute propriété intrinsèque de conduction ionique, par exemple un polytétrafluoroéthylène du type Teflon^{®} (Du Pont de Nemours).

Selon encore un cinquième procédé, la fabrication de la membrane polymère composite comprend :
a) le dépôt d'un matériau conducteur électronique dans les pores d'une matrice poreuse constituée d'un polymère conducteur ionique intrinsèque, et comprenant au moins deux portions destinées à rester à conduction ionique, reliées entre elles directement par une portion destinée à être remplie d'un matériau conducteur électronique, ce dépôt étant limité à la portion de matrice poreuse destinée à être remplie du matériau conducteur électronique ; et
b) l'application à la matrice poreuse d'un traitement pour obtenir le ramollissement du polymère constituant cette matrice et le bouchage des pores de ladite matrice par déformation du polymère ainsi ramolli.

Ce dernier procédé est particulièrement préféré compte tenu de sa simplicité.

On notera que tous les procédés qui viennent d'être décrits ont en commun de comprendre :
- une opération qui consiste à conférer à une matrice poreuse ou à une portion de cette matrice des propriétés de conduction électronique et ce, par dépôt d'un matériau conducteur électronique dans les pores de ladite matrice ou de ladite portion de matrice ; et
- une opération qui consiste à rendre étanche aux gaz la matrice poreuse ou la portion de matrice poreuse ainsi remplie de matériau conducteur électronique et ce, par application d'un traitement permettant de ramollir le polymère constituant cette matrice ou cette portion de matrice et d'obtenir le bouchage des pores de ladite matrice ou portion de matrice par le polymère ainsi ramolli.

Conformément à l'invention, le dépôt du matériau conducteur électronique, qui peut être l'un quelconque des matériaux conducteurs électroniques précédemment mentionnés, est, de préférence, réalisé par l'une des techniques de dépôt sous vide classiquement employées pour l'élaboration de couches minces, et en particulier par dépôt chimique en phase vapeur (CVD), par dépôt physique en phase vapeur (PVD) ou encore par procédé "electroless" ou réduction chimique d'un sel métallique.

Le ramollissement du polymère, qui peut également être l'un quelconque des polymères précédemment cités, peut être, lui, réalisé par tout traitement connu de l'homme du métier pour provoquer le ramollissement, voire la fusion, d'un polymère comme un chauffage, un traitement par des ultra-sons ou par un rayonnement haute-fréquence.

Idéalement, ce traitement est appliqué de sorte à amener le polymère à une température intermédiaire entre sa température de ramollissement et sa température de fusion.

Dans le cas où la fabrication de la membrane polymère composite comprend une étape de remplissage par un matériau conducteur ionique de portions de matrice poreuse, alors ce remplissage peut être réalisé de différentes manières, par exemple :
* en imprégnant ces portions de matrice poreuse d'une solution contenant le matériau conducteur ionique dans un solvant ;
* en imprégnant ces portions de matrice poreuse d'une solution contenant un précurseur du matériau conducteur ionique dans un solvant, puis en appliquant secondairement auxdites portions un traitement, par exemple thermique, pour induire la transformation de ce précurseur en ledit matériau conducteur ionique ; ou encore
* en déposant, sur ces portions de matrice poreuse, le matériau conducteur ionique sous la forme d'un film, puis en appliquant secondairement auxdites portions un traitement, par exemple thermique, pour obtenir la fusion de ce film et ainsi l'infiltration du matériau conducteur ionique dans lesdites portions de matrice poreuse.

Dans le cas où la fabrication de la membrane polymère composite comprend une étape d'intercalation d'un segment polymère à conduction électronique entre au moins deux segments polymères à conduction ionique et de solidarisation de ces segments entre eux, alors les segments polymères à conduction ionique peuvent eux-mêmes être obtenus par découpe, en segments de forme et de dimensions appropriées, d'une matrice poreuse formée d'un polymère, identique ou non au polymère formant la matrice poreuse remplie du matériau conducteur électronique, que l'on a préalablement rendue conductrice ionique par remplissage avec un matériau conducteur ionique.

En variante, il est également possible que ces segments proviennent d'une pièce formée d'un polymère conducteur ionique, par exemple par moulage, et que l'on a préalablement découpée en segments de forme et de dimensions appropriées.

Quant à la solidarisation des segments, elle peut notamment être réalisée par pressage à chaud.

Quoi qu'il en soit, on obtient, par ces procédés, des membranes polymères composites dont la ou les portions polymères à conduction électronique présentent une conductivité électronique particulièrement élevée (généralement supérieure à 1 S/cm) doublée d'une parfaite étanchéité aux gaz.

Les procédés selon l'invention sont donc extrêmement avantageux puisqu'ils permettent de fabriquer des membranes polymères composites propres à entrer dans la constitution de coeurs de piles à combustible planaires, notamment du type de celle décrite dans la référence **[1],** et à améliorer, de par leurs propriétés, les performances électrochimiques de ces piles, tout en simplifiant leur fabrication puisqu'il n'est plus nécessaire de réaliser des couples de parois isolantes et qu'il devient possible d'intégrer les joints de périphérie en même temps que les membranes.

Est encore décrit un coeur de pile à combustible planaire comprenant :
- une membrane polymère composite telle que précédemment définie ;
- une pluralité d'anodes disposées sur une face de cette membrane ; et
- une pluralité de cathodes disposées sur la face de cette membrane opposée à celle où se trouve la pluralité d'anodes.

D'autres caractéristiques et avantages de l'invention apparaîtront mieux à la lecture du complément de description qui suit, qui se rapporte à des exemples de fabrication selon l'invention de membranes polymères composites à conduction ionique/électronique et qui se réfère aux figures annexées.

Bien entendu, ces exemples ne sont donnés qu'à titre d'illustrations de l'objet de l'invention et ne constituent en aucun cas une limitation de cet objet.

### BRÈVE DESCRIPTION DES FIGURES

La figure 1 illustre schématiquement un étage d'une pile à combustible selon la référence [1], vu en coupe transversale.
Les figures 2a à 2d illustrent schématiquement un premier exemple de fabrication selon l'invention d'une membrane polymère composite à conduction ionique/conduction électronique.
Les figures 3a à 3d illustrent schématiquement un deuxième exemple de fabrication selon l'invention d'une membrane polymère composite à conduction ionique/conduction électronique .
Les figures 4a à 4d illustrent schématiquement un troisième exemple de fabrication selon l'invention d'une membrane polymère composite à conduction ionique/conduction électronique.
Les figures 5a à 5d illustrent schématiquement un quatrième exemple de fabrication selon l'invention d'une membrane polymère composite à conduction ionique/conduction électronique.
Les figures 6a à 6c illustrent schématiquement un cinquième exemple de fabrication selon l'invention d'une membrane polymère composite à conduction ionique/conduction électronique.
La figure 7 illustre schématiquement, vu en coupe transversale, un coeur de pile propre à entrer dans la constitution d'une pile à combustible planaire et comprenant une membrane polymère composite telle que montrée sur la figure 6c.

Dans ces figures, les proportions des membranes polymères composites et des éléments qui les constituent ont été volontairement exagérées dans un souci de clarté.

### EXEMPLES

On se réfère tout d'abord aux figures 2a à 2d qui illustrent schématiquement un premier exemple de fabrication selon l'invention d'une membrane polymère composite 10' à conduction ionique/électronique.

Cette membrane, qui est représentée sur la figure 2d, vue en coupe transversale, comprend trois portions polymères 11' à conduction ionique étanches aux gaz et deux portions polymères 12' à conduction électronique, également étanches aux gaz, chaque portion 12' à conduction électronique étant intercalée entre deux portions 11' à conduction ionique.

Dans cet exemple, la membrane est fabriquée par traitement d'une matrice poreuse constituée d'un polymère dénué de toute propriété intrinsèque de conduction ionique, et dont on destine :
- trois premières portions à former les portions 11' à conduction ionique de la membrane et, donc, à être remplies d'un matériau conducteur ionique, et
- deux autres portions à former les portions 12' à conduction électronique de la membrane et, donc, à être remplies d'un matériau conducteur électronique.

Il va de soi que la forme et les dimensions de la matrice poreuse sont donc choisies en fonction de la forme et des dimensions devant être présentées par la membrane.

En l'espèce, la membrane se présentant sous la forme d'un film, la matrice poreuse se présente également sous la forme d'un film comme l'illustre la figure 2a qui montre cette matrice, référencée 10, vue en coupe transversale.

La première étape consiste à déposer un matériau conducteur électronique dans les portions de la matrice poreuse 10 destinées à former les portions 12' à conduction électronique de la membrane 10'.

Pour ce faire et comme visible sur la figure 2a, après avoir recouvert l'une des faces principales de la matrice poreuse d'un masque mécanique 17, qui est muni de deux ouvertures 16 dont l'emplacement et la taille sont choisies en fonction des portions de la matrice que l'on souhaite remplir du matériau conducteur électronique, on dépose, par exemple par CVD, PVD ou procédé "electroless", le matériau conducteur électronique (Ce) dans les seules portions de la matrice qui sont situées en regard de ces ouvertures. Puis, on retourne cette matrice et on recommence la même opération sur l'autre de ses faces principales.

On obtient ainsi la matrice 10 montrée sur la figure 2b.

La deuxième étape consiste à appliquer, aux deux portions 12 de cette matrice qui ont été remplies du matériau conducteur électronique, un traitement permettant d'obtenir, au niveau de ces seules portions, le ramollissement du polymère constituant la matrice et le bouchage des pores de cette matrice par déformation du polymère ainsi ramolli. Ces portions sont ainsi rendues étanches aux gaz et on obtient la matrice 10 montrée sur la figure 2c.

La troisième étape, qui est illustrée par la figure 2c, consiste, elle, à remplir d'un matériau conducteur ionique (Cᵢ) les trois portions 11 de la matrice 10 qui sont destinées à former les portions 11' à conduction ionique de la membrane et qui sont, elles, encore poreuses. Par ce remplissage, ces portions sont, à leur tour, rendues étanches aux gaz.

On obtient ainsi 1a membrane 10' montrée sur la figure 2d.

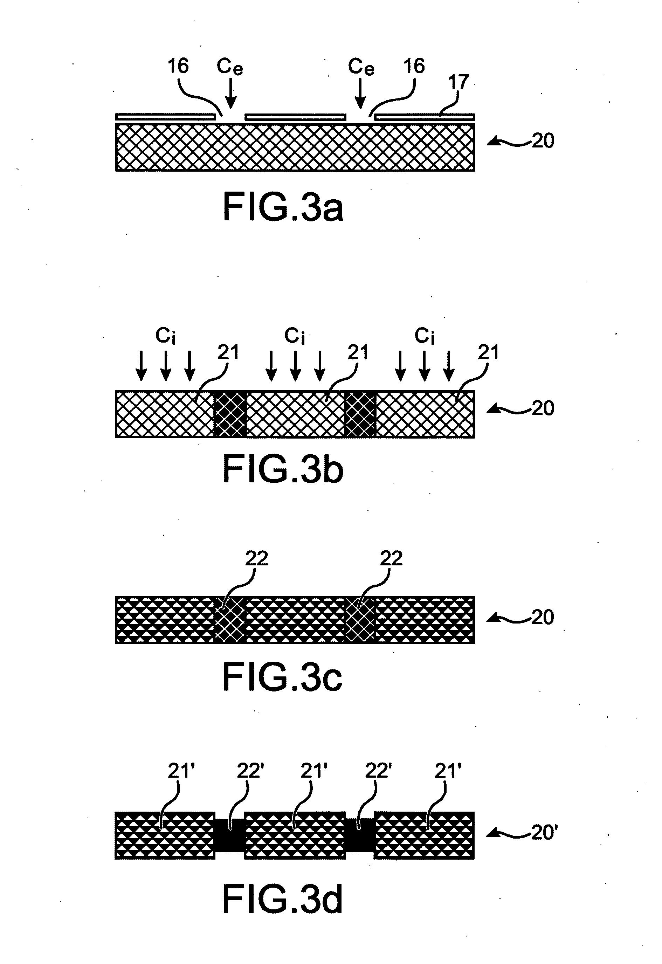

On se réfère à présent aux figures 3a à 3b qui illustrent schématiquement un deuxième exemple de fabrication selon l'invention d'une membrane polymère composite 20' à conduction ionique/électronique.

Cette membrane, qui est représentée sur la figure 3d, vue en coupe transversale, comprend, comme la précédente, trois portions polymères 21' à conduction ionique étanches aux gaz, reliées entre elles par deux portions polymères 22' à conduction électronique étanches aux gaz.

Dans cet exemple, la membrane est également fabriquée par traitement d'une matrice poreuse constituée d'un polymère dénué de toute propriété intrinsèque de conduction ionique, et on retrouve les mêmes étapes que celles décrites dans l'exemple précédent, sauf que l'ordre des deux dernières étapes est inversé.

Ainsi, après l'étape de dépôt, illustrée par la figure 3a, d'un matériau conducteur électronique dans les seules portions d'une matrice poreuse 20 qui sont destinées à former les portions 22' à conduction électronique de la membrane, la fabrication de cette dernière a :
- pour deuxième étape, le remplissage, par un matériau conducteur ionique, des trois portions 21 de la matrice 20 qui sont destinées à former les portions 21' à conduction ionique de la membrane, cette étape étant illustrée par la figure 3b et conduisant à la matrice montrée sur la figure 3c ; et
- pour troisième étape, l'application, aux deux portions 22 de la matrice 20 qui sont remplies du matériau conducteur électronique, d'un traitement propre à ramollir le polymère formant ces portions de matrice et le bouchage des pores de ces portions de matrice par déformation du polymère ainsi ramolli.

On obtient ainsi la membrane 20' montrée sur la figure 3d.

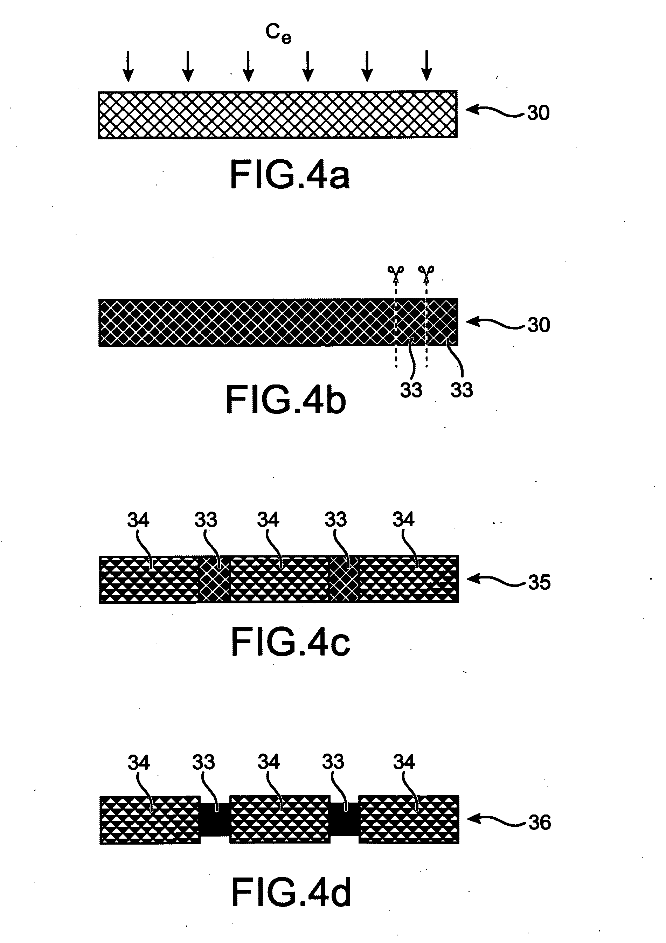

Les figures 4a à 4d illustrent schématiquement un troisième exemple de fabrication selon l'invention d'une membrane polymère composite 36 à conduction ionique/électronique.

Cette membrane, qui est représentée sur la figure 4d, vue en coupe transversale, comprend, comme les précédentes, trois portions polymères 34 à conduction ionique étanches aux gaz et deux portions polymère 33 à conduction électronique étanches aux gaz, chaque portion 33 à conduction électronique étant intercalée entre deux portions 34 à conduction ionique.

Dans cet exemple, la membrane polymère composite est fabriquée par assemblage de deux segments à conduction électronique, obtenus par dépôt d'un matériau conducteur électronique dans une matrice poreuse constituée d'un polymère dénué de toute propriété intrinsèque de conduction ionique, et découpe de cette matrice, avec trois segments à conduction ionique obtenus indépendamment desdits segments à conduction électronique.

Aussi, dans ce cas, n'est-il pas nécessaire que la matrice poreuse ait une forme et des dimensions correspondant à celles de la membrane devant être fabriquée.

La première étape consiste, donc, à déposer un matériau conducteur électronique dans l'ensemble d'une matrice poreuse 30, comme visible sur la figure 4a.

Puis, la deuxième étape, qui est illustrée par la figure 4b, consiste à découper la matrice poreuse 30 ainsi remplie du matériau conducteur électronique en au moins deux segments 33.

Ensuite, comme montré par la figure 4c, on forme une membrane composite 35 en intercalant deux segments 33 entre trois segments 34 à conduction ionique obtenus par ailleurs, et on solidarise ces segments entre eux, par exemple par pressage à chaud.

On applique alors, aux deux segmentes 33 de matrice poreuse revêtus du matériau conducteur électronique présents dans la membrane 35 ainsi formée, un traitement permettant d'obtenir le ramollissement du polymère formant ces segments de matrice et le bouchage des pores desdits segments de matrice par le polymère ainsi ramolli.

On obtient ainsi la membrane montrée 36 sur la figure 4d.

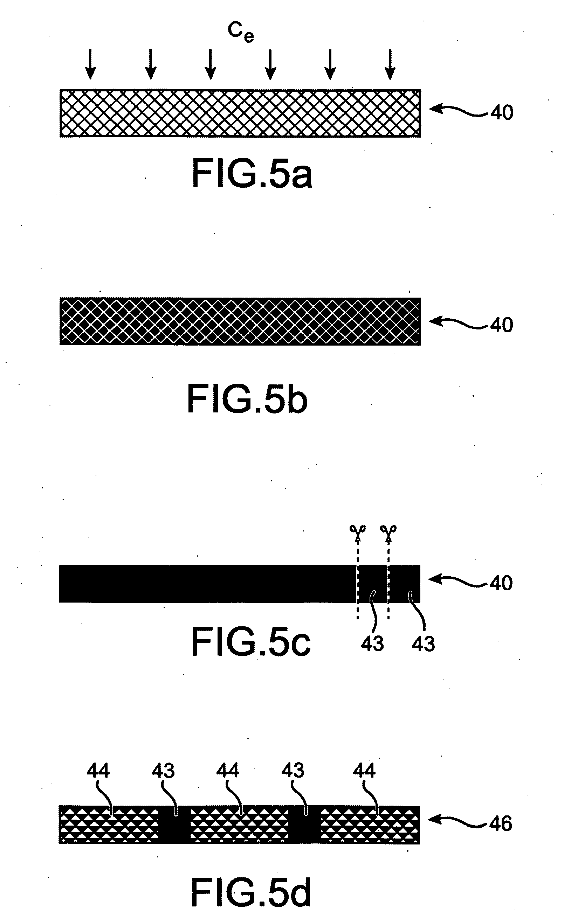

Les figures 5a à 5d illustrent schématiquement un quatrième exemple de fabrication selon l'invention d'une membrane polymère composite 46 à conduction ionique/conduction électronique.

Cette membrane, qui est représentée sur la figure 5d, vue en coupe transversale, comprend, comme les précédentes, trois portions polymères 44 à conduction ionique étanches aux gaz et deux portions polymères 43 à conduction électronique étanches aux gaz, chaque portion 43 à conduction électronique étant intercalée entre deux portions 44 à conduction ionique.

Dans cet exemple, on retrouve les mêmes étapes que celles décrites dans l'exemple précédent, à ceci près que l'ordre des trois dernières étapes est inversé.

Ainsi, après l'étape de dépôt d'un matériau conducteur électronique dans une matrice poreuse 40, la fabrication de la membrane a :
- pour deuxième étape, l'application à cette matrice poreuse d'un traitement permettant d'obtenir le ramollissement du polymère qui la forme et le bouchage des pores de cette matrice par déformation du polymère ainsi ramolli, cette étape permettant d'obtenir la matrice montrée sur la figure 5b ;
- pour troisième étape, la découpe de la matrice ainsi obtenue en au moins deux segments 43, cette étape étant illustrée par la figure 5c ; et
- pour quatrième étape, la formation de la membrane par intercalation de deux segments 43 entre trois segments 44 à conduction ionique obtenus par ailleurs, et solidarisation de ces segments entre eux, par exemple par pressage à chaud.

On obtient ainsi la membrane 46 montrée sur la figure 5d.

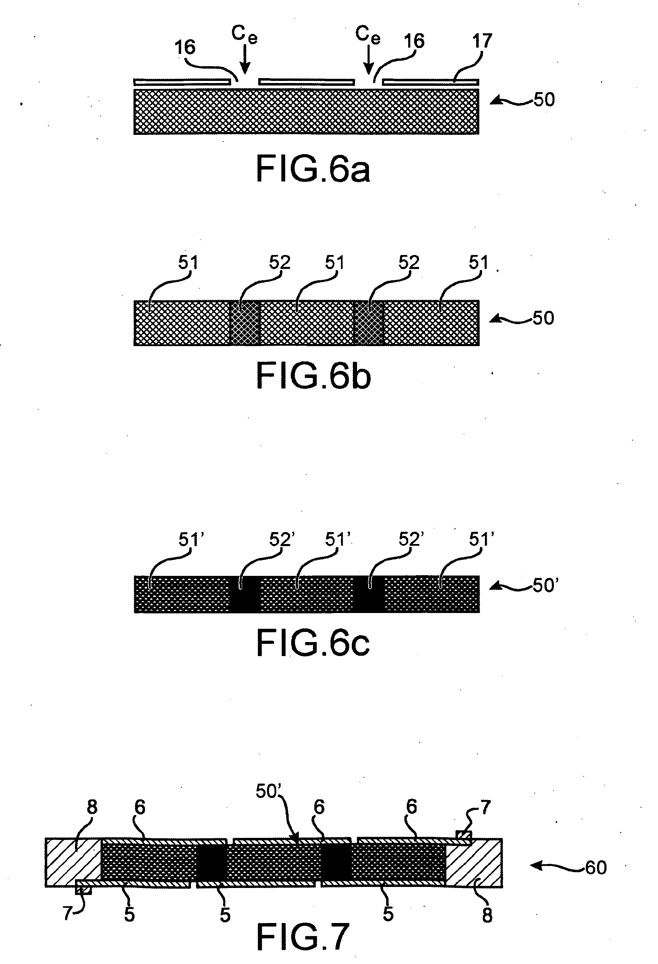

Les figures 6a à 6c illustrent schématiquement un cinquième exemple de fabrication selon l'invention d'une membrane polymère composite 50' à conduction ionique/électronique.

Cette membrane, qui est représentée sur la figure 6c, vue en coupe transversale, comprend, comme les précédentes, trois portions polymères 51' à conduction ionique étanches aux gaz et deux portions polymères 52' à conduction électronique, également étanches aux gaz, chaque portion 52' à conduction électronique étant intercalée entre deux portions 51' à conduction ionique.

Dans cet exemple, la membrane est fabriquée, comme dans les deux premiers exemples, par traitement d'une matrice poreuse dont on destine trois premières portions à former les portions 51' à conduction ionique de la membrane et deux autres portions à former les portions 52' à conduction électronique de la membrane, mais cette matrice est constituée d'un polymère conducteur ionique intrinsèque contrairement aux matrices poreuses utilisées dans les deux premiers exemples.

Ainsi, comme visible sur la figure 6a, le traitement consiste, dans un premier temps, à déposer un matériau conducteur électronique dans les seules portions d'une matrice poreuse 50 qui sont destinées à former les portions 52' à conduction électronique de la membrane, ce dépôt étant réalisé de la même manière que dans les deux premiers exemples. On obtient ainsi la matrice 50 montrée sur la figure 6b qui comporte trois portions 51 à conduction ionique et deux portions 52 à conduction électronique.

Puis, on applique à l'ensemble de la matrice poreuse un traitement permettant d'obtenir le ramollissement du polymère qui la constitue et le bouchage des pores de cette matrice par déformation du polymère ainsi ramolli. L'ensemble de la matrice est ainsi rendu étanche aux gaz et on obtient la membrane 50' montrée sur la figure 6c.

On se réfère à présent à la figure 7 qui illustre schématiquement, vu en coupe transversale, un coeur de pile 60 propre à entrer dans la constitution d'une pile à combustible planaire, qui comprend :
* une membrane polymère composite 50' identique à celle montrée sur la figure 6c ;
* une succession d'anodes 5 sur l'une des faces principales de la membrane, chaque anode étant disposée sur cette face de sorte à être en contact surfaçique avec elle ;
* une succession de cathodes 6 sur l'autre des faces principales de la membrane, chaque cathode étant disposée sur cette face de sorte à être en contact surfaçique avec elle et les cathodes étant décalées par rapport aux anodes de sorte que les cathodes et les anodes situées en vis-à-vis recouvrent la même portion de membrane à conduction ionique mais ne recouvrent pas la même portion de membrane à conduction électronique ;
* un collecteur électronique 7 à chacune des extrémités de l'assemblage membrane/électrodes ; et
* un joint périphérique 8 sur tout le pourtour de la membrane 50'.

### Réalisation d'un cour de pile comprenant une membrane polymère composite fabriquée conformément au deuxième exemple décrit ci-avant

On utilise, comme matrice poreuse, un tissu constitué d'un copolymère éthylène/tétrafluoroéthylène disponible auprès de la société Sefar Fyltis sous la dénomination Fluortex^{®} 09-105/32 et mesurant 20 cm de long sur 5 cm de large.

On confère à deux portions de ce tissu, mesurant chacune 2,5 cm de long sur 5 cm de large et espacées l'une de l'autre de 5 cm au moyen d'un masque mécanique, des propriétés de conduction électronique par dépôt PVD d'or.

Ce dépôt PVD est, dans un premier temps, effectué sur l'une des faces de la matrice dans une enceinte de dépôt où règne une pression de 10⁻⁶ mbar, par pulvérisation d'une cible d'or de 20 cm de diamètre sous un plasma d'argon (de pression égale à 1,3 Pa) généré par un générateur basse fréquence d'une puissance de 100 W et cela, pendant 5 minutes.

Le plasma est ensuite arrêté pendant 5 minutes. Ce cycle est répété 4 fois afin d'obtenir une épaisseur de dépôt de 500 nm, puis le tissu est retourné afin d'effectuer le même dépôt sur l'autre face de ce tissu.

A l'issue de ces opérations, le tissu possède deux portions à conduction électronique de 2,5 cm de long sur 5 cm de large. La conductivité du tissu dans ces zones, telle que mesurée par spectroscopie d'impédance, est de 0,5 S/cm.

Par ailleurs, on fabrique des films d'un précurseur du Nafion^{®} par extrusion de granulés de ce précurseur provenant de Du Pont de Nemours, sur une extrudeuse Thermo Electron comportant 6 zones de chauffage régulées à la température de 230°C. Les films mesurent 100 micromètres d'épaisseur grâce à l'utilisation d'un banc de calandrage en sortie de filière d'extrusion (filière plate de type portemanteau de 20 cm de large).

Ils sont ensuite déposés à la surface des portions du tissu qui n'ont pas été rendues conductrices électronique.

Le tissu est porté à une température de 200°C sous 30 bars de pression dans une presse uniaxiale pendant 5 minutes, ce qui permet d'incorporer le polymère conducteur protonique dans le tissu.

Les portions à conduction électronique du tissu sont ensuite portées à une température de 260°C pendant 2 minutes sous une pression de 10 MPa pour induire, au niveau de ces portions, le ramollissement du tissu et obtenir ainsi leur étanchéité aux gaz.

La matrice est ensuite immergée dans une solution de potasse 2M à 80°C pendant 4 heures pour convertir les fonctions sulfonyles du précurseur du Nafion^{®} en fonctions sulfoniques.

On réalise ensuite un coeur de pile à combustible en déposant sur les deux faces de la membrane polymère composite ainsi obtenues des électrodes ETEK (chargées en platine à 0,5 mg/cm²). L'ensemble est pressé pendant 3 minutes à 150°C sous 50 bars pour assurer une bonne interface entre les électrodes et la membrane.

La mesure des performances électrochimiques de ce coeur de pile, dans un banc de test de type Globtech, ave une injection d'hydrogène à l'anode de 500 mL/minute et d'oxygène à la cathode de 500 mL/minute, montrent que sa tension à l'abandon est de 2,7 volts et que sa tension est de 1,5 volt sous un courant de 6 ampères.

### Réalisation d'un coeur de pile à combustible comprenant une membrane polymère composite fabriquée conformément au cinquième exemple décrit ci-avant

On fabrique un tissu conducteur protonique mesurant 200 micromètres d'épaisseur et présentant des mailles de 50 x 50 µm² à partir de granulés de Nafion^{®}.

On confère à deux portions de ce tissu des propriétés de conduction électronique de la même façon que celle décrite ci-avant.

Une fois les portions à conduction électronique créées, l'ensemble du tissu est pressé à chaud à 210°C sous une pression de 30 bars pendant 5 minutes afin d'induire le ramollissement du tissu et obtenir son étanchéité aux gaz.

Le tissu est ensuite immergé dans une solution de potasse 2M à 80°C pendant 4 heures pour convertir les fonctions sulfonyles du précurseur du Nafion^{®} en fonctions sulfoniques.

On réalise ensuite un coeur de pile à combustible en déposant sur les deux faces de la membrane polymère composite ainsi obtenues des électrodes ETEK (chargées en platine à 0,5 mg/cm²). L'ensemble est pressé pendant 3 minutes à 150°C sous 50 bars pour assurer une bonne interface entre les électrodes et la membrane.

La mesure des performances électrochimiques de ce coeur de pile, dans un banc de test de type Globtech, ave une injection d'hydrogène à l'anode de 500 mL/minute et d'oxygène à la cathode de 500 mL/minute, montrent que sa tension est de 2,1 volts sous un courant de 6 ampères.

L'invention ne se limite nullement aux exemples qui viennent d'être décrits.

Ainsi, notamment, si ces exemples portent tous sur la fabrication de membranes polymères composites qui comprennent trois portions à conduction ionique et deux portions à conduction électronique, il va de soi, toutefois, que leur enseignement est parfaitement transposable à la fabrication de membranes comprenant un nombre autre de portions à conduction ionique et, partant, un nombre autre de portions à conduction électronique.

De manière similaire, l'enseignement des exemples décrits ci-avant est tout à fait transposable à la fabrication de membranes polymères composites se présentant sous une forme autre que celle d'un film.

### REFERENCES CITEES

[1] WO-A-02/054522
[2] US-A-5,863,672

## Revendications

1. Procédé de fabrication d'une membrane polymère composite (10') à conduction ionique/électronique, comprenant au moins deux portions polymères (11') à conduction ionique étanches aux gaz, reliées entre elles directement par une portion polymère (12') à conduction électronique étanche aux gaz, lequel procédé comprend :
a) le dépôt d'un matériau conducteur électronique dans les pores d'une matrice poreuse (10) constituée d'un polymère et comprenant au moins deux portions (11) destinées à être remplies d'un conducteur ionique, reliées entre elles directement par une portion (12) destinée à être remplie d'un matériau conducteur électronique, ce dépôt étant limité à la portion de matrice poreuse destinée à être remplie du matériau conducteur électronique ;
b) l'application, à la portion de matrice poreuse remplie du matériau conducteur électronique, d'un traitement pour obtenir le ramollissement du polymère formant cette portion de matrice et le bouchage des pores de ladite portion de matrice par déformation du polymère ainsi ramolli ; et
c) le remplissage par un matériau conducteur ionique des portions de matrice poreuse destinées à être remplies du matériau : conducteur ionique.

2. Procédé de fabrication d'une membrane polymère composite (20') à conduction: ionique/électronique, comprenant au moins deux portions polymères (21') à conduction ionique étanches aux gaz, reliées entre elles directement par une portion polymère (22') à conduction électronique étanche aux gaz, lequel procédé comprend :
a) le dépôt d'un matériau conducteur électronique dans les pores d'une matrice poreuse (20) constituée d'un polymère et comprenant au moins deux portions (21) destinées à être remplies d'un matériau conducteur ionique et au moins une portion (22) destinée à être remplie d'un matériau conducteur électronique, ce dépôt étant limité à la portion de matrice poreuse destinée à être remplie du matériau conducteur électronique ;
b) le remplissage par un matériau conducteur ionique des portions de la matrice poreuse destinées à être remplies du matériau conducteur ionique ; et
c) l'application, à la portion de la matrice poreuse remplie du matériau conducteur électronique, d'un traitement pour obtenir le ramollissement du polymère formant cette portion de matrice et le bouchage des pores de ladite portion de matrice par déformation du polymère ainsi ramolli.

3. Procédé de fabrication d'une membrane polymère composite (36) à conduction ionique/électronique, comprenant au moins deux portions polymères (34) à conduction ionique étanches aux gaz, reliées entre elles directement par une portion polymère (33) à conduction électronique étanche aux gaz, lequel procédé comprend :
a) le dépôt d'un matériau conducteur électronique dans les pores d'une matrice poreuse (30) constituée d'un polymère ;
b) la découpe de la matrice poreuse remplie de matériau conducteur électronique en une pluralité de segments (33) ;
c) la formation d'une membrane polymère composite par intercalation d'un des segments obtenus à l'étape b) entre au moins deux segments polymères (34) à conduction ionique étanches aux gaz et solidarisation de ces segments entre eux ; et
d) l'application, au segment de matrice poreuse rempli du matériau conducteur électronique présent dans la membrane polymère composite obtenue à l'étape c), d'un traitement pour obtenir le ramollissement du polymère formant ce segment de matrice et le bouchage des pores dudit segment de matrice par déformation du polymère ainsi ramolli.

4. Procédé de fabrication d'une membrane polymère composite (46) à conduction ionique/électronique, comprenant au moins deux portions polymères (44) à conduction ionique étanches aux gaz, reliées entre elles directement par une portion polymère (43) à conduction électronique étanche aux gaz, lequel procédé comprend :
a) le dépôt d'un matériau conducteur électronique dans les pores d'une matrice poreuse (40) constituée d'un polymère ;
b) l'application à la matrice poreuse d'un traitement pour obtenir le ramollissement du polymère qui la constitue et le bouchage des pores de cette matrice par déformation du polymère ainsi ramolli ;
c) la découpe de la matrice obtenue à l'étape b) en une pluralité de segments (43) ; et
d) la formation de la membrane polymère composite par intercalation d'un des segments obtenus à l'étape c) entre au moins deux segments polymères (44) à conduction ionique étanches aux gaz et solidarisation de ces segments entre eux.

5. Procédé selon l'une quelconque des revendications 1 à 4, dans lequel la matrice poreuse est constituée d'un polymère dénué de toute propriété intrinsèque de conduction ionique.

6. Procédé de fabrication d'une membrane polymère composite (50') à conduction ionique/électronique, comprenant au moins deux portions polymères (51') à conduction ionique étanches aux gaz, reliées entre elles directement par une portion polymère (52') à conduction électronique étanche aux gaz, lequel procédé comprend :
a) le dépôt d'un matériau conducteur électronique dans les pores d'une matrice poreuse (50) constituée d'un polymère conducteur: ionique intrinsèque, et comprenant au moins deux portions (51) destinées à rester à conduction ionique, reliées entre elles directement par une portion (52) destinée à être remplie d'un matériau conducteur électronique, ce dépôt étant limité à la portion de matrice poreuse destinée à être remplie du matériau conducteur électronique ; et
b) l'application à la matrice poreuse d'un traitement pour obtenir le ramollissement du polymère constituant cette matrice et le bouchage des pores de ladite matrice par déformation du polymère ainsi ramolli.

7. Procédé selon l'une quelconque des revendications 1 à 6, dans lequel le matériau conducteur électronique est déposé par dépôt chimique en phase vapeur (CVD), par dépôt physique en phase vapeur (PVD) ou par procédé "electroless".

8. Procédé selon l'une quelconque des revendications 1 à 7, dans lequel le traitement pour ramollir le polymère est un traitement thermique, un traitement par des ultra-sons ou un traitement par un rayonnement haute-fréquence.

9. Procédé selon la revendication 1 ou la revendication 2, dans lequel le remplissage, par un matériau conducteur ionique, des portions de matrice poreuse destinées à être remplies du matériau conducteur ionique est réalisé en imprégnant ces portions d'une solution contenant le matériau conducteur ionique dans un solvant.

10. Procédé selon la revendication 1 ou la revendication 2, dans lequel le remplissage, par un matériau conducteur ionique, des portions de matrice poreuse destinées à être remplies du matériau conducteur ionique est réalisé en imprégnant ces portions d'une solution contenant un précurseur du matériau conducteur ionique dans un solvant, puis en appliquant secondairement auxdites portions un traitement pour induire la transformation de ce précurseur en ledit matériau conducteur ionique.

11. Procédé Selon la revendication 1 ou la revendication 2, dans lequel le remplissage, par un matériau conducteur ionique, des portions de matrice poreuse destinées à être remplies du matériau conducteur ionique est réalisé en déposant, sur ces portions de matrice poreuse, le matériau conducteur ionique sous la forme d'un film, puis en appliquant secondairement auxdites portions un traitement pour obtenir la fusion de ce film et ainsi l'infiltration du matériau conducteur ionique dans lesdites portions de matrice poreuse.

12. Procédé selon la revendication 3 ou la revendication 4, dans lequel les segments polymères à conduction ionique sont obtenues par découpe d'une matrice poreuse constituée d'un polymère conducteur ionique intrinsèque ou d'un polymère dénué de toute propriété intrinsèque de conduction ionique que l'on a rendu conducteur ionique par incorporation d'un matériau conducteur ionique.

13. Procédé selon la revendication 3 ou la revendication 4, dans lequel la solidarisation des segments est réalisée par pressage à chaud.

14. Procédé selon la revendication 6 ou la revendication 12, dans lequel le polymère conducteur ionique intrinsèque est un polymère à conduction protonique choisi parmi les polymères perfluorés à groupements acide sulfonique, les polyimides sulfonés, les polyétheréthercétones sulfonées, les polysulfones sulfonées et leurs dérivés, les polyphosphazènes sulfonés et les polybenzimidazoles.

15. Procédé selon la revendication 6 ou la revendication 12, dans lequel le polymère conducteur ionique intrinsèque est un polymère à conduction anionique choisi parmi les polymères porteurs de groupements cationiques, en particulier les dérivés quaternisés des polychlorométhylstyrènes, des polyanilines et des polyimides, et les polyarylsulfoniums.

16. Procédé selon la revendication 5 ou la revendication 12, dans lequel le polymère: dénué de toute propriété intrinsèque de conduction ionique est choisi parmi les polyéthylène, les polypropylènes, les polyesters thermoplastiques, les polymères fluorés, les polyamides, les polyétheréthercétones et les élastomères thermoplastiques.

17. Procédé selon la revendication 1 ou la revendication 2, dans lequel le matériau conducteur ionique est un polymère conducteur ionique intrinsèque ou un matériau non polymérique à conduction ionique.

18. Procédé selon l'une quelconque des revendications 1 à 6, dans lequel le matériaux conducteur électronique est choisi parmi le carbone, le graphite, les métaux nobles et les alliages de métaux nobles et d'éléments de transition.

## Claims

1. Process s for manufacturing an ion/electron-conducting composite polymer membrane (10'), comprising at least two gas-tight ion-conducting polymer portions (11') joined together directly by a gas-tight electron-conducting polymer portion (12'), which process comprises:
a) depositing an electron-conductive material in the pores of a porous matrix (10) composed of a polymer and comprising at least two portions (11) intended to be filled with an ion conductor, joined together directly by a portion (12) intended to be filled with an electron-conductive material, this s deposition being limited to the portion of the porous matrix intended to be filled with the electron-conductive material;
b) applying, to the portion of the porous matrix filled with the electron-conductive material, a treatment for obtaining the softening of the polymer that forms this matrix portion and the blocking of the pores of said matrix portion by deformation of the thus softened polymer; and
c) filling, with an ion-conductive material, the porous matrix portions intended to be filled with the ion-conductive material.

2. Process for manufacturing an ion/electron-conducting composite polymer membrane (20'), comprising at least two gas-tight ion-conducting polymer portions (21') joined together directly by a gas-tight electron-conducting polymer portion (22'), which process comprises:
a) depositing an electron-conductive material in the pores of a porous matrix (20) composed of a polymer and comprising at least two portions (21) intended to be filled with an ion-conductive material and at least a portion (22) intended to be filled with an electron-conductive material, this deposition being limited to the portion of the porous matrix intended to be filled with the electron-conductive material;
b) filling, with an ion-conductive material, the porous matrix portions intended to be filled with the ion-conductive material, and
c) applying, to the portion of the porous matrix filled with the electron-conductive material, a treatment for obtaining the softening of the polymer that forms this matrix portion and the blocking of the pores of said matrix portion by deformation of the thus softened polymer.

3. Process for manufacturing an ion/electron-conducting composite polymer membrane (36), comprising at least two gas-tight ion-conducting polymer portions (34) joined together directly by a gas-tight electron-conducting polymer portion (33), which process comprises:
a) depositing an electron-conductive material in the pores of a porous matrix (30) composed of a polymer;
b) by cutting the porous matrix filled with an electron-conductive material into a plurality of segments (33);
c) firming a composite polymer membrane by inserting one of the segments obtained in step b) between at least two gas-tight ion-conducting polymer segments (34) and firmly joining these segments together; and
d) applying, to the segment of porous matrix filled with the electron-conductive material present in the composite polymer membrane obtained in step c), a treatment for obtaining the softening of the polymer that forms this matrix segment and the blocking of the pores of said matrix segment by deformation of the thus softened polymer.

4. Process for manufacturing an ion/electron-conducting composite polymer membrane (46), comprising at least two gas-tight ion-conducting polymer portions (44) joined together directly by a gas-tight electron-conducting Polymer portion (43), which process comprises:
a) depositing an electron-conductive material in the pores of a porous matrix (40) composed of a polymer;
b) applying, no the porous matrix, a treatment for obtaining the softening of the polymer which forms it and the blocking of the pores of this matrix by deformation of the thus softened Polymer;
c) cutting the matrix obtained in step b) into a plurality of segments (43); and
d) forming a composite polymer membrane by inserting one of these segments obtained in step c) between at least two gas-tight ion-conducting polymer segments (44) and firmly joining these segments together.

5. Process according to any one of Claims 1 to 4, in which the porous matrix is composed of a polymer devoid of any intrinsic ion-conducting property.

6. Process for manufacturing an ion/electron-conducting composite polymer membrane (50'), comprising at least two gas-tight ion-conducting polymer portions (51') joined together directly by a gas-tight electron-conducting polymer portion (52'), which process comprises:
a) depositing an electron-conductive material in the pores of a porous matrix (50) composed of an intrinsically ion-conductive polymer and comprising at least two portions (51) intended to remain ion-conductive, joined together directly by a portion (52) intended to be filled with an electron-conductive material, this deposition being limited to the portion of the porous matrix intended to be filled with the electron-conductive material; and
b) applying, to the porous matrix, a treatment for obtaining the softening of the polymer that forms this matrix and the blocking of the pores of said matrix by deformation of the thus softened polymer.

7. Process according to any one of Claims 1 to 6, in which the electron-conductive material is deposited by chemical vapour deposition (CVD), by physical vapour deposition (PVD) or by an "electroless" process.

8. Process according to any one of Claims 1 to 7, in which the treatment for softening the polymer is a heat treatment, an ultrasound treatment or a high-frequency radiation treatment.

9. Process according to Claim 1 or Claim 2, in which the filling, with an ion-conductive material, of the porous matrix portions intended to be filled with the ion-conductive material is carried out by impregnating these portions with a solution containing the ion-conductive material in a solvent.

10. Process according to Claim 1 or Claim 2, in which the filling, with an ion-conductive material, of the porous matrix portions intended to be filled with the ion-conductive material is carried out by impregnating these portions with a solution containing a precursor of the ion-conductive material in a solvent, then by secondarily applying, to said portions, a treatment to induce the conversion of this precursor to said ion-conductive material.

11. Process according to Claim 1 or Claim 2, in which the filing, with an ion-conductive material, of the porous matrix portions intended to be filled with the ion-conductive material is carried out by depositing, on these porous matrix portions, the ion-conductive material in the form of a film, then by secondarily applying, to said portions, a treatment for melting this film and thus infiltrating the ion-conductive material into said porous matrix portions.

12. process according to Claim 3 or Claim 4, in which the ion-conducting polymer segments are obtained by cutting a porous matrix composed of an intrinsically ion-conductive polymer or of a polymer devoid of any intrinsic ion-conducting property that is made ion-conductive by incorporation of an ion-conductive material.

13. Process according to Claim 3 or Claim 4, in which the firm attachment of the segments is carried out by hot pressing.

14. Process according to Claim 6 or Claim 12, in which the intrinsically ion-conductive polymer is a proton-conducting polymer chosen from perfluorinated polymers with sulphonic acid groups, sulphonated polyimides, sulphonated polyetheretherketones, sulphonated polysulphones and derivatives thereon, sulphonated polyphosphazenes and polybenzimidazoles.

15. Process according to Claim 6 or Claim. 12, in which the intrinsically ion-conductive polymer is an anion-conducting polymer chosen from polymer bearing cationic groups, in particular quaternized derivatives of polychloromethylstyrenes, of polyanilines and of polyimides, and polyaryl sulphoniums.

16. Process according to Claim 5 or Claim 12, in which the polymer devoid of any intrinsic ion-conducting properly is chosen from polyethylenes, polypropylenes, thermoplastic polyesters, fluoropolymers, polyamides, polyetheretherketones and thermoplastic elastomers.

17. Process according to Claim 1 or Claim 2, in which the ion-conductive material 1 is an intrinsically ion-conductive polymer or an ion-conducting non-polymeric material.

18. Process according to anyone of Claims 1 to 6, in which the electron-conductive material is chosen from carbon, graphite, noble metals and alloys of nobble metals and of transition elements.

## Patentansprüche

1. Verfahren zur Herstellung einer ionen-/elektronenleitenden Po(ymerverbundmembran (10'), die wenigstens zwei gasdichte, ionenleitende Polymerabschnitte (11') umfasst, die durch einen gasdichten, elektronenleitenden Polymerabschnitt (12') direkt miteinander verbunden sind, wobei das Verfahren Folgendes umfasst:
a) das Aufbringen eines elektronenleitenden Materials in den Poren einer porösen Matrix (10), die sich aus einem Polymer zusammensetzt und wenigstens zwei Abschnitte (11) umfasst, die dazu bestimmt sind, mit einem Ionenleiter gefüllt zu werden und die durch einen Abschnitt (12) direkt miteinander verbunden sind, der dazu bestimmt ist, mit einem elektronenleitenden Material gefüllt zu werden, wobei dieses Aufbringen auf den Abschnitt der porösen Matrix beschränkt ist, der dazu bestimmt ist, mit dem elektronenleitenden Material gefüllt zu werden,
b) das Anwenden einer Behandlung auf den Abschnitt der mit dem elektronenleitenden Material gefüllten porösen Matrix unter Erzielen eines Erreichens des diesen Matrixabschnitt bildenden Polymers und Blockierens der Poren dieses Matrixabschnitts durch Verformung des auf diese Weise erweichten Polymers und
c) das Füllen der Abschnitte der porösen Matrix, die dazu bestimmt sind, mit dem ionenleitenden Material gefüllt zu werden, mit einem ionenleitenden Material.

2. Verfahren zur Herstellung einer ionen-lelektronenleitenden Polymerverbundmembran (20'), die wenigstens zwei gasdichte, ionenleitende Polymerabschnitte (21') umfasst, die durch einen gasdichten, elektronenleitenden Polymerabschnitt (22') direkt miteinander verbunden sind, wobei das Verfahren Folgendes umfasst:
a) das Aufbringen eines elektronenleitenden Materials in den Poren einer porösen Matrix (20), die sich aus einem Polymer zusammensetzt und wenigstens zwei Abschnitte (21), die dazu bestimmt sind, mit einem ionenleitenden Material gefüllt zu werden, und wenigstens einen Abschnitt (22) umfasst, der dazu bestimmt ist, mit einem elektronenleitenden Material gefüllt zu werden, wobei dieses Aufbringen auf den Abschnitt der porösen Matrix beschränkt ist, der dazu bestimmt ist, mit dem elektronenleitenden Material gefüllt zu werden,
b) das Füllen der Abschnitte der porösen Matrix, die dazu bestimmt sind, mit dem ionenleitenden Material gefüllt zu werden, mit einem ionenleitenden Material und
c) das Anwenden einer Behandlung auf den Abschnitt der mit dem elektronenleitenden Material gefüllten porösen Matrix unter Erzielen eines Erweichens des diesen Matrixabschnitt bildenden Polymers und Blockierens der Poren dieses Matrixabschnitts durch Verformung des auf diese Weise erweichten Polymers.

3. Verfahren zur Herstellung einer ionen-lelektronenleitenden Polymerverbundmembran (36), die wenigstens zwei gasdichte, ionenleitende Polymerabschnitte (34) umfasst, die durch einen gasdichten, elektronenleitenden Polymerabschnitt (33) direkt miteinander verbunden sind, wobei das Verfahren Folgendes umfasst:
a) das Aufbringen eines elektronenleitenden Materials in den Poren einer porösen Matrix (30), die sich aus einem Polymer zusammensetzt,
b) das Zerschneiden der mit elektronenleitendem Material gefüllten porösen Matrix in eine Mehrzahl Segmente (33),
c) das Bilden einer Polymerverbundmembran durch Einfügen eines der in Schritt b) erhaltenen Segmente zwischen wenigstens zwei gasdichte, ionenleitende Polymersegmente (34) und feste Verbinden dieser Segmente miteinander und
d) das Anwenden einer Behandlung auf das in der in Schritt c) erhaltenden Polymerverbundmembran vorliegend Segment der mit dem elektronenleitenden Material gefüllten porösen Matrix unter Erzielen eines Erweichens des dieses Matrixsegment bildenden Polymers und Blockierens der Poren dieses Matrixsegments durch Verformung des auf diese Weise erweichten Polymers.

4. Verfahren zur Herstellung einer ionen-lelektronenleitenden Polymerverbundmembran (46), die wenigstens zwei gasdichte, ionenleitende Polymerabschnitte (44) umfasst, die durch einen gasdichten, elektronenleitenden Polymerabschnitt (43) direkt miteinander verbunden sind, wobei das Verfahren Folgendes umfasst:
a) das Aufbringen eines elektronenleitenden Materials in den Poren einer porösen Matrix (40), die sich aus einem Polymer zusammensetzt,
b) das Anwenden einer Behandlung auf die poröse Matrix unter Erzielen eines Erweichen des sie bildenden Polymers und Blockierens der Poren dieser Matrix durch Verformung des auf diese Weise erweichten Polymers,
c) das Zerschneiden der in Schritt b) erhaltenen Matrix in eine Mehrzahl Segmente (43) und
d) das Bildern der Poiymerverbundmembran durch Einfügen eines dieser in Schritt c) erhaltenen Segmente zwischen wenigstens zwei gasdichte, ionenleitende Polymersegmente (44) und feste Verbinden dieser Segmente miteinander.

5. Verfahren gemäß einem der Ansprüche 1 bis 4, bei dem sich die poröse Matrix aus einem Polymer ohne jegliche intrinsische lonenleitfähigkeit zusammensetzt.

6. Verfahren zur Herstellung einer ionen-lelektronenleitenden Polymerverbundmembran (50'), die wenigstens zwei gasdichte, ionenleitende Polymerabschnitte (51') umfasst, die durch einen gasdichten, elektronenleitenden Polymerabschnitt (52') direkt miteinander verbunden sind, wobei das Verfahren Folgendes umfasst:
a) das Aufbringen eines elektronenleitenden Materials in den Poren einer porösen Matrix (50), die sich aus einem intrinsisch ionenleitenden Polymer zusammensetzt und wenigstens zwei Abschnitte (51) umfasst, die dazu bestimmt sind, ionenleitend zu bleiben und die durch einen Abschnitt (52) direkt miteinander verbunden sind, der dazu bestimmt ist, mit einem elektronenleitenden Material gefüllt zu werden, wobei dieses Aufbringen auf den Abschnitt der porösen Matrix beschränkt ist, der dazu bestimmt ist, mit dem elektronenleitenden Material gefüllt zu werden, und
b) das Anwenden einer Behandlung auf die poröse Matrix unter Erzielen eines Erweichens des diese Matrix bildenden Polymers und Blockierens der Poren dieser Matrix durch Verformung des auf diese Weise erweichten Polymers.

7. Verfahren gemäß einem der Ansprüche 1 bis 6, bei dem das elektronenleitende Material durch chemische Gasphasenabscheidung (CVD), durch physikalische Gasphasenabscheidung (PVD) oder ein "stromloses" Verfahren aufgetragen wird.

8. Verfahren gemäß einem der Ansprüche 1 bis 7, bei dem die Behandlung zum Erweichen des Polymers eine Wärmebehandlung, eine Ultraschallbehandlung oder eine Hochfrequenzstrahlungsbehandlung ist.

9. Verfahren gemäß Anspruch 1 oder Anspruch 2, bei dem das Füllen mit einem ionenleitenden Material der Abschnitte der porösen Matrix, die dazu bestimmt sind, mit dem ionenleitenden Material gefüllt zu werden, durch imprägnieren dieser Abschnitte mit einer das ionenleitende Material in einem Lösungsmittel enthaltenden Lösung erfolgt.

10. Verfahren gemäß Anspruch 1 oder Anspruch 2, bei dem das Füllen mit einem ionenleitenden Material der porösen Abschnitte der Matrix, die dazu bestimmt sind, mit dem ionenleitenden Material gefällt zu werden, durch Imprägnieren dieser Abschnitte mit einer einen Vorläufer des ionenleitenden Materials in einem Lösungsmittel enthaltenden Lösung und dann durch zusätzliches Anwenden einer Behandlung auf diese Abschnitte zum Herbeiführen der Umwandlung dieses Vorläufers in das ionenleitende Material erfolgt.

11. Verfahren gemäß Anspruch 1 oder Anspruch 2, bei dem das Füllen mit einem ionenleitenden Material der Abschnitte der porösen Matrix, die dazu bestimmt sind, mit dem ionenleitenden Material gefüllt zu werden, durch Auftragen des ionenleitenden Materials in Form eines Filmes auf diese Abschnitte der porösen Membran und dann durch zusätzliches Anwenden einer Behandlung auf diese Abschnitte zum Erzielen des Schmelzens dieses Films und auf diese Weise das Eindringen des ionenleitenden Materials in die Abschnitte der porösen Matrix erfolgt.

12. Verfahren gemäß Anspruch 3 oder Anspruch 4, bei dem die ionenleitenden Polymersegmente durch Zerschneiden einer porösen Matrix erhalten werden, die sich aus einem intrinsisch ionenleitenden Polymer oder aus einem Polymer ohne jegliche Eigenschaft einer intrinsischen lonenleitfähigkeit, das durch Einbau eines ionenleitenden Materials ionenleitend gemacht wurde, zusammensetzt.

13. Verfahren gemäß Anspruch 3 oder Anspruch 4, bei dem das feste Verbinden der Segmente durch Heisspressen erfolgt.

14. Verfahren gemäß Anspruch 6 oder Anspruch 12, bei dem das intrinsisch ionenleitende Polymer ein aus perfluorierten Polymeren mit Sulfonsäuregruppen, sulfonierten Polyimide, sulfonierten Polyetheretherketonen, sulfonierten Polysulfonen und ihren Derivaten, sulfonierten Polyphosphazenen und Polybenzimidazolen ausgewähltes protonenleitendes Polymer mit ist.

15. Verfahren gemäß Anspruch 6 oder Anspruch 12, bei dem das intrinsisch ionenleitende Polymer ein aus kationische Gruppen tragenden Polymeren, insbesondere quaternisierten Polychlormethylstyrolderivaten, Polyanilinen und Polyimiden und Polyarylsulfoniumverbindungen ausgewähltes anionenleitendes Polymer ist.

16. Verfahren gemäß Anspruch 5 oder Anspruch 12, bei dem das Polymer ohne jegliche Eigenschaft einer intrinsischen lonenleitfähigkeit aus Polyethylenen, Polypropylenen, thermoplastischen Polyestern, fluorierten Polymeren, Polyamiden, Polyetherketonen und thermoplastischen Elastomeren ausgewählt ist.

17. Verfahren gemäß Anspruch 1 oder Anspruch 2, bei dem das ionenleitende Material ein intrinsisch ionenleitendes Polymer oder ein nichtpolymeres, ionenleitendes Material ist.

18. Verfahren gemäß einem der Ansprüche 1 bis 6, bei dem das elektronenleitende Material aus Kohlenstoff, Graphit, Edelmetallen und Legierungen von Edelmetallen und Übergangsmetallen ausgewählt ist.
